# EUROPÄISCHE PATENTSCHRIFT

(11) **EP 2 704 909 B1**
(45) Veröffentlichungstag und Bekanntmachung des Hinweises auf die Patenterteilung: **13.04.2016**
(21) Anmeldenummer: 12717303.7
(22) Anmeldetag: 27.04.2012
(51) Int. Cl.: B29D 22/02, B60C 5/10

(54) **RADSCHLAUCH**
TIRE TUBE
TUBE DE BICYCLETTE

(30) Priorität: 05.05.2011 DE 102011100562
(43) Veröffentlichungstag der Anmeldung: 12.03.2014
(73) Patentinhaber: GAADI Bicycle Tube GmbH, 41189 Mönchengladbach (DE)
(72) Erfinder: JETTEN, Adolf, Andreas, 41066 Mönchengladbach (DE)
(74) Vertreter: von Kreisler Selting Werner - Partnerschaft von Patentanwälten und Rechtsanwälten mbB
(86) Internationale Anmeldenummer: PCT/EP2012/057741
(87) Internationale Veröffentlichungsnummer: WO 2012/150187

(56) Entgegenhaltungen:
- DE-A1- 19 817 046
- DE-C- 68 027
- DE-C- 737 816
- US-A1- 2007 125 470
- US-A1- 2008 223 497

## Beschreibung

Gegenstand der Erfindung ist ein Radschlauch zur Bespannung auf eine Felge, welcher nicht in sich geschlossen ist, sondern zwei Enden aufweist. Weiterer Gegenstand der Erfindung ist auch ein Verfahren zur Herstellung eines entsprechenden Radschlauchs.

DE 298 03 621 U1 beschreibt einen Fahrradschlauch, der dadurch gekennzeichnet ist, dass der Schlauch offen ist, eine Überlappung hat, auf der Kleber ist und dieser durch eine Schutzfolie vor dem Austrocknen schützt. Auf der Gegenseite des offenen Schlauches befindet sich eine Fixierungsstelle ohne Kleber, sowie eine Klebestelle mit Schutzfolie, die diese vor dem Austrocknen schützt.

DE 1 684 222 beschreibt eine aus einzelnen Schlauchgliedern bestehende Bereifung, bei der sich einzelne Schlauchglieder aneinander reihend um die Felge legen.

US 175,357 beschreibt Verbesserungen in den Schläuchen von pneumatischen Reifen, bei dem die Enden eines offenen Schlauches mit einer Fixierfläche über den gesamten Querschnitt der Berührungsflächen versehen sind. Aufgrund der hohen Materialdichte im Bereich der Berührungsflächen lässt sich ein entsprechender Schlauch nur schwer in einem Mantel gleichförmig mit Druckluft befüllen.

DE 37 29 670 A1 beschreibt einen Schlauch mit lösbarer Endlosverbindung, bei dem ein mit einem Ventil ausgestatteter Schlauch von Luftbereifungen ein Schlauchende aufweist, das durch Einkrempeln gedoppelt ist, wobei die beiden offenen Schlauchenden ähnlich einer Muffenverbindung ineinander geschoben sind.

AT 31 915 B beschreibt einen geteilten Luftschlauch für Pneumatikreifen, bei dem die Enden des Schlauches nach Art eines Stecker/Kupplungsprinzips miteinander verbunden werden.

DE 92 02 345 U1 beschreibt einen Schlauch für Fahrradreifen, der dadurch gekennzeichnet ist, dass ein ringförmiger Schlauch an einer Stelle geteilt ist und länger als der Radumfang ist. Dessen einander zugekehrten Enden sind verschlossen und liegen aufeinander. Die Wandstärke der übereinander liegenden Schlauchenden ist dicker als die Wandstärke des Schlauches.

DE 100 32 300 A1 beschreibt einen luftdichten aufpumpbaren Schlauch für Hartbereifungen, wobei nach dem Einziehen des Radschlauches unter den Radmantel in die nötige Position ein Schlauchende in ein zweites Schlauchende eingeschoben wird.

DE 198 17 046 A1 beschreibt einen Fahrradschlauch, der nicht mehr in sich geschlossen ist, bei dem sich beim Einlegen in einen Fahrradmantel die Enden überlappen. Durch einen Klettverschluss werden die überlappenden Enden verbunden um ein Verrutschen der Überlappung zu verhindern. WO 97/25215 greift prinzipiell die Technik des DE 9202345 U1 auf. Analoges Prinzip gilt auch für DE 739 848, die ebenfalls einen Zweiendschlauch beschreibt.

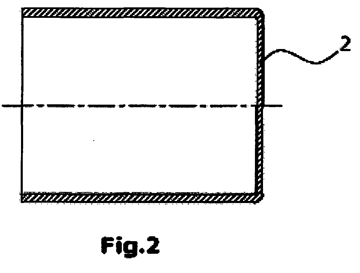

DE 198 28 412 A1 beschreibt einen Schlauch für einen Reifen und Rad. Der Schlauch für einen Reifen, insbesondere einen Fahrradreifen ist dadurch gekennzeichnet, dass der Schlauch zwei Endbereiche mit je einem geschlossenen Ende aufweist. Auch hier sollen sich die relativ spitzen Enden des Schlauches innerhalb des Mantels überlappen, wie aus der Figur 2b zu erkennen ist. In den Figuren 4a und 4b werden stumpfe Schlauchenden mit einer Klebeeinrichtung/Haltevorrichtung versehen.

US 2008/0223497 A1 betrifft einen inneren Schlauch eines Reifens, der ein erstes und ein zweites Ende aufweist, wobei diese Enden es erlauben sollen, den Schlauch ohne Ausbau des Reifens zu wechseln. Dieser Schlauch besteht entweder aus einer gebogenen oder geraden Röhre mit jeweils abgerundeten Endkappen, die an den offenen Enden der Röhre befestigt sind.

DE 737 816 beschreibt einen Zweiendschlauch für Fahrräder, bei dem die Abschlussstücke und seine beiden Ende aus einem dehnbareren Werkstoff als der übrige Schlauch gefertigt ist. Die Schlauchenden werden in einer Muffe zusammengeführt. Die sich bildende Kugelform verhindert das Einführen in die Muffe.

Der Einsatz der Halteringe (i) und (h) führt zu einem relativ harten Bereich im Verlauf der Kreisbahn des Schlauches, der sich beim Fahren unangenehm bemerkbar macht. Dies gilt übrigens auch für alle sonstigen Zweiendschläuche des Standes der Technik, bei denen sich mehr oder weniger große Bereiche der Enden der Schläuche überlappen.

Dementsprechend ist es eine wesentliche Aufgabe der vorliegenden Erfindung einen Radschlauch zur vollständigen Bespannung auf eine Felge zur Verfügung zu stellen, welcher nicht in sich geschlossen ist, sondern zwei Enden aufweist und darüber hinaus im Fahrbetrieb keine überlappenden Endbereiche des Radschlauches aufweist, die aufgrund einer erhöhten Materialstärke zu einer Unwucht des Rades führen.

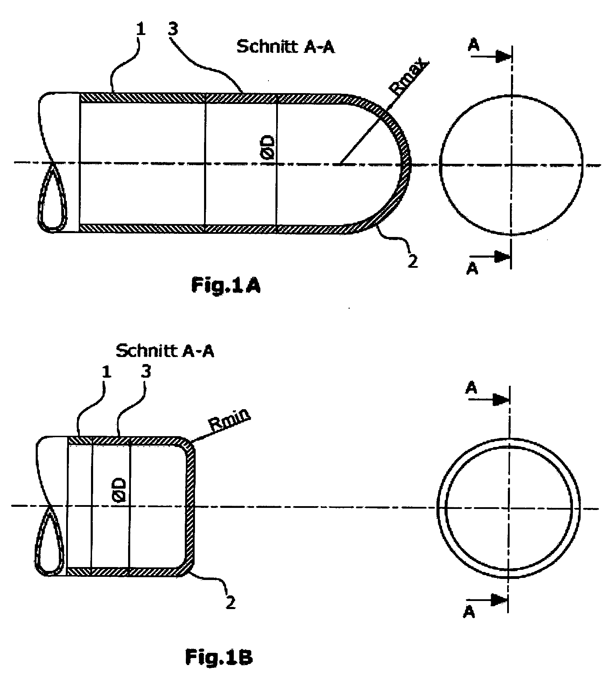

Die vorgenannte Aufgabe der vorliegenden Erfindung wird in einer ersten Ausführungsform gelöst durch Anspruch 1. Eine kalottenförmige Ausführung hat jedoch den Nachteil, dass hierbei der Druck, der notwendig ist, um den Mantelinnenraum zu füllen, wesentlich größer ist. Daher ist Gegenstand der Erfindung die stumpfe Form, wie in der Fig. 1B oder 2 dargestellt.

Die Einfügung eines gesonderten Schlauchabschnitts 3 als verbindendes Element zwischen dem Schlauch 1 und der Endkappe 2 mit der Wölbung hat den besonderen Vorteil, dass die Endkappe 2 separat hergestellt werden kann und somit zwei stumpfe Endstücke des Radschlauchs beziehungsweise des Schlauchabschnitts 3 miteinander verklebt werden können. Dies vermeidet Unwuchten im Bereich der Klebestellen.

Wenn im Sinne der vorliegenden Erfindung Teile miteinander verklebt werden, so ist dies dahingehend zu verstehen, dass die Teile "Stoß an Stoß" mit einander verbunden, gefügt, werden.

In aufwendigen Versuchen haben die Erfinder der vorliegenden Anmeldung gefunden, dass eine Überlappung der beiden Enden des Schlauches unbedingt vermieden werden sollte. Darüber hinaus sollte auch der Berührungsbereich der beiden Schlauchenden innerhalb des Mantels so ausgestaltet werden, dass hier im Wesentlichen die Materialstärke der Endbereiche des Schlauches möglichst nahe der Materialstärke des restlichen Schlauches entspricht.

Eine Ausführungsform der Erfindung besteht aus einem Schlauch mit einem stumpfen Schlauchende, das mit einer im Wesentlichen kreisrunden Endplatte verschlossen ist.

Die Materialeigenschaften des Schlauches können dabei vollständig den Materialeigenschaften eines Fahrradschlauchs entsprechen, wie er in der EP 1 786 635 B1 beschrieben ist. Auch die dort als Endkappen des Schlauches bezeichneten, hier als Enden des Schlauches definierte Bereiche, können daher von gleichem Material sein.

Die Fig. 1 zeigt einen nicht erfindungsgemäßen Radschlauch 1, beim dem die Endkappe 2 über den Schlauchabschnitt 3 mit dem Schlauch 1 verbunden ist.

Der Radius der Wölbung der Endkappe 2 entspricht hier dem größtmöglichen Radius des Schlauches mit einem kalottenförmigen Schlauchende.

In der Fig. 1b hingegen wird der Schlauch 1 über den Schlauchabschnitt 3 mit der Endkappe 2 verbunden.

In der Fig. 2 wird das Endstück des erfindungsgemäßen Radschlauchs dargestellt, das als Formteil per Spritzguss hergestellt und an den Schlauch 1 (nicht dargestellt) "Stoß an Stoß" angefügt ist.

Die Materialstärke der Endplatte ist hier dünner ausgeführt, als die anderen Teile des Endstücks, das die gleiche Materialstärke wie der Schlauch 1 aufweist. Dennoch ist die notwendige Wölbung des Endstücks bzw. der Endkappe 2 auch hier deutlich zu erkennen.

Eine weitere Ausführungsform der vorliegenden Erfindung umfasst ein Verfahren zur Herstellung des Radschlauchs gemäß Anspruch 1.

Die separate Herstellung und Verbindung der Endkappe 2 mit einem unvulkanisierten oder teilvulkanisierten Schlauchabschnitt 3, der sich auf einem Dorn mit einer Wölbung befindet, die der Wölbung der Endkappe entspricht, hat den besonderen Vorteil, dass in einer einfachen Art und Weise ein Endstück hergestellt wird. Wird anschließend der unvulkanisierte oder teilvulkanisierte Schlauchabschnitt 3 mit den ebenfalls unvulkanisierten oder teilvulkanisierten Schlauch 1 zusammengefügt, so ist es möglich, diese beiden Abschnitte mit einander zu verkleben und anschließend endzuvulkanisieren.

Die zweite Endkappe 2 wird entsprechend mit einem zweiten unvulkanisierten oder teilvulkanisierten Schlauchabschnitt 3 verbunden, so dass es möglich ist, entweder einen oder zwei Schlauchabschnitte 3 gleichzeitig mit dem Schlauch 1 zu verbinden.

## Patentansprüche

1. Radschlauch zur vollständigen Bespannung auf eine Felge, welcher nicht in sich geschlossen ist, sondern zwei Enden aufweist, der Radschlauch umfassend:
einen Schlauch (1) mit zwei offenen Enden und zwei Endkappen (2), die jeweils eine abgerundete Wölbung aufweisen, die Wölbung einem stumpfen Schlauchende entspricht, das mit einer kreisförmigen Endplatte abgeschlossen ist, die zwei Endkappen (2) jeweils mit einem gesonderten Schlauchabschnitt (3) durch Anvulkanisation verbunden sind und
die Endkappen (2) mit dem Schlauch (1) Stoß an Stoß über den jeweiligen Schlauchabschnitt (2) als verbindendes Element stoffschlüssig durch Vulkanisation verbunden sind.

2. Verfahren zur Herstellung eines Radschlauchs nach Anspruch 1 mit geschlossenen Enden, **dadurch gekennzeichnet, dass** man
in einem ersten Schritt in einer Spritzgussform eine, eine abgerundete Wölbung aufweisende erste Endkappe (2) an einen ersten unvulkanisierten oder teilvulkanisierten Schlauchabschnitt (3) Stoß an Stoß anspritzt, der sich auf einem Dorn mit einer entsprechenden Wölbung befindet,
in einem zweiten Schritt die erste Endkappe (2) und den ersten Schlauchabschnitt (3) anvulkanisiert,
in einem dritten Schritt den Dorn entnimmt und den ersten Schlauchabschnitt (3) mit der ersten Endkappe (2) aus der Spritzgussform entnimmt,
in einem vierten Schritt den ersten Schlauchabschnitt (3) an den unvulkanisierten oder teilvulkanisierten Schlauch (1) Stoß an Stoß durch Vulkanisation anfügt,
wobei mit der zweiten Endkappe (2) entsprechend vorgegangen wird,
in einem fünften Schritt den Schlauch (1), die Schlauchabschnitte (3) und die Endkappen (2) endvulkanisiert.

## Claims

1. A wheel inner tube for complete mounting on a rim which is not continuous but rather has two ends, said wheel inner tube comprising:
a tube (1) with two open ends and two end caps (2), each being rounded with a bulge, said bulge corresponding to a blunt tube end that is closed with a circular end plate, the two end caps (2) each being connected with a separate tube section (3) by vulcanization; and
said end caps (2) being connected with the tube (1) edge to edge through the respective tube section (2) as a connecting element integrally by vulcanization.

2. A method for preparing a wheel inner tube according to claim 1 with closed ends, **characterized in that**
a first end cap (2) being rounded with a bulge is joined by injection molding to a first non-vulcanized or partially vulcanized tube section (3) edge to edge, which is present on a mandrel with a corresponding bulge, in a first step;
the first end cap (2) and the first tube section (3) are partially vulcanized in a second step;
the mandrel is withdrawn and the first tube section (3) with the first end cap (3) is removed from the injection mold in a third step;
the first tube section (3) is joined to the non-vulcanized or partially vulcanized tube (1) edge to edge by vulcanization in a fourth step;
the same procedure being applied to the second end cap (2);
the tube (1), the tube sections (3) and the end caps (2) are finally vulcanized in a fifth step.

## Revendications

1. Tube intérieur de roue pour montage complet sur une jante, ledit tube n'étant pas fermé en soi, mais présente deux extrémités, ledit tube intérieur de roue comprenant :
un tube intérieur (1) avec deux extrémités ouvertes et deux embouts (2), chacun d'eux présentant un renflement arrondi, ledit renflement correspondant à une extrémité de tube émoussée qui est fermée avec une plaque terminale circulaire, lesdits deux embouts (2) étant chacun relié à une section séparée (3) du tube par vulcanisation, et
lesdits embouts (2) étant reliés au tube (1) bords à bords par l'intermédiaire de la section du tube respective (2) comme élément reliant intégralement par vulcanisation.

2. Procédé pour produire un tube intérieur de roue selon la revendication 1 avec des extrémités fermées, **caractérisé en ce que** l'on
relie, dans une première étape, un premier embout (2) présentant un renflement arrondi par injection à une première section du tube (3) non-vulcanisée ou partiellement vulcanisée, qui se situe sur un mandrin avec un renflement correspondant, bords à bords dans un moule d'injection,
vulcanise partiellement, dans une deuxième étape, ledit premier embout (2) et ladite première section du tube (3),
retire, dans une troisième étape, le mandrin et retire la première section du tube (3) avec le premier embout (2) du moule d'injection,
relie, dans une quatrième étape, la première section du tube (3) au tube (1) non-vulcanisé ou partiellement vulcanisé bords à bords par vulcanisation,
la même procédure étant appliquée au deuxième embout (2) par analogie,
vulcanise complètement, dans une cinquième étape, le tube (1), les sections de tube (3) et les embouts (2).
